# EUROPEAN PATENT SPECIFICATION

(11) **EP 0 629 151 B1**
(45) Date of publication and mention of the grant of the patent: **18.12.1996**
(21) Application number: 93906022.4
(22) Date of filing: 17.02.1993
(51) Int. Cl.: B29C 55/00, C08J 5/18

(54) **ELASTIC ARTICLES HAVING IMPROVED UNLOAD POWER**
ELASTISCHE GEGENSTÄNDE MIT VERBESSERTER ENTSPANNUNGSLEISTUNG
ARTICLES ELASTIQUES PRESENTANT UNE CAPACITE AMELIOREE DE SUPPRESSION DE CONTRAINTE

(30) Priority: 19.02.1992 US 837769
(43) Date of publication of application: 21.12.1994
(73) Proprietor: EXXON CHEMICAL PATENTS INC., Baytown, TX 77520-5200 (US)
(72) Inventor: MEHTA, Aspy, Keki, Humble, TX 77346 (US)
(74) Representative: Veldhuizen, Albert Dirk Willem
(86) International application number: PCT/US93/01413
(87) International publication number: WO 93/16863

(56) References cited:
- EP-A- 0 374 783
- EP-A- 0 384 694
- WO-A-90/03414
- WO-A-92/14784

## Description

### FIELD OF THE INVENTION

The present invention relates to elastic articles and a method for their production. More particularly this invention relates to ethylene-based plastomer articles having improved unload power and a process for their production. Even more particularly this invention relates to a plastomer precursor which, by a post polymerization process of orienting and annealing, is made into an article having improved unload power.

### BACKGROUND OF THE INVENTION

Elastomeric polymers are utilized in a wide variety of applications for which non-elastic polymers are totally unsuited. For example, in articles of clothing, such elastomeric polymers are utilized as neck, wrist, waist, ankle and head bands. As the garment is worn, the elastic polymer band must have enough "unload power" to hold it in place. When the garment is not worn, it is generally desirable that the elastic polymer band have a low "residual set" so that the elastic polymer band of the garment returns essentially to its original shape. In addition, the elastic polymer band must also demonstrate a high degree of repeatability as the garment is worn over a long period of time. In terms of garment applications, these constraints dictate which of those elastomeric polymer compositions now known can be fabricated into article forms which can be placed into applications in garments.

"Unload power" is an important elastic tensile property in elastics applications, particularly for garment applications. For example, in diaper applications, the unload power of an elastomeric article provides an indication of the retractive force which holds the elastomeric article which is part of the diaper leg of the garment against the infant's body. In all elastomeric materials, the unload power is lower than the load power (the force required to extend the strip). This difference shows up as a hysteresis (i.e. the force to extend is different than the force to hold in place) and is larger for synthetic elastomers than in the case of a natural rubber. "Residual set" refers to the change between the length of an elastomeric material before and after its extension to a certain length for a certain time for a certain number of cycles. Residual set may be for example, the percent change in length of a film after extension of the film to 200 percent of its initial length through 5 cycles. Each cycle would consist of extending the film to 200 percent of its initial length, holding the film extended for a time period, releasing the extending force, and allowing the film to return for a time period.

Typical elastic materials utilized for clothing applications include polyurethanes, ethylene-propylene rubbers (EP or EPR), including ethylene-propylene-diene terpolymers (EPDM), and natural rubbers.

Polyurethanes have the desired unload power, residual set and repeatability for use in most garment applications. However, polyurethanes have a relatively high specific gravity, which results in a lower yield of polyurethane articles hence a higher cost as compared to comparable lower specific gravity polymers. Furthermore, where the garment is to be used once and quickly discarded, such as with surgical garments or disposable diapers, polyurethanes as an element thereof are overengineered for the desired use of that garment and thus overly expensive. For garment applications, conventional EPs and EPDMs have very poor intrinsic physical properties and for such applications generally must be blended with a plastic material such as low density polyethylene, linear low density polyethylene or ethylene vinyl acetate copolymers. Ideally, for suitability in such garment applications an EP and/or EPDM which does not need such blending has been desired.

For polyurethanes, EPs and EPDMs, to get an "accordion" shape or "gather" formation, such as around the leg opening of a disposable diaper, it has been necessary to expose that portion of the overall garment article to heat to cause shrinkage of the elastomeric article of the garment. Conventionally, used elastic materials require a relatively high shrinkage temperature. In addition, many of them require pre-stretching for good gather formation. Exposing the garment article to such a relatively high temperature may be detrimental to the overall properties of the garment. Further, the commonly used elastic materials generally have to be melt glued to achieve bonding to the garment, such as to a polyolefin layer in the garment. Controlled heat bonding to such a polyolefin substrate, if possible, would be advantageous.

A need exists for an elastic article that can be economically utilized in disposable garment applications. There also exists a need for use in garment applications an elastic article with a relatively low shrinkage temperature. Additionally, there exists a need for an elastic article that can be heat bonded/sealed to polyolefins.

A need still exists for elastic articles of optimum quality for particular uses. It is still a desire of the art to provide elastic articles having high quality characteristics composed of ethylene based plastomers.

Accordingly, the present invention relates to elastic materials having improved unload powers, wherein the elastic materials comprise ethylene based elastomers and plastomers made from metallocene catalysts. Such elastic materials having improved unload powers are produced by subjecting a precursor elastic film to orienting and annealing.

### SUMMARY OF THE INVENTION

According to one embodiment of the present invention there is provided a process for producing an elastic film of improved unload power which comprises providing a precursor film that is oriented and annealed. The film comprises a copolymer of ethylene polymerized with at least one comonomer selected from the group consisting of C₃ to C₂₀ alpha-olefins and C₃ to C₂₀ polyenes utilizing a metallocene catalyst, wherein the copolymer has a density in the range of 0.855 g/cm³ to less than 0.900 g/cm³, a melt index in the range of 0.2 to 1000, with a Composition Distribution Breadth Index (CDBI) at least 45 percent and a molecular weight distribution in the range of 1.5 to 30. The orientation of the film is to a draw ratio in the range of 2:1 to 20:1. The annealing is conducted at a temperature between the film softening point and melting point. The combination of orientation and annealing provides the opportunity for novel property profiles. Significant variation in the property profile can be achieved by controlling the amount of orientation and annealing adopted during the fabrication.

Preferably, the copolymer has preferred density range from 0.88 to 0.900 g/cm³.

### BRIEF DESCRIPTION OF THE DRAWINGS

FIG. 1 is a schematic of the present invention showing the precursor film being made by the slit film extrusion process (also referred to as ribbon yarn extrusion process), wherein the melted polymer is extruded through a die to form the precursor film. Also shown are the orienting and annealing apparatus for making an elastic film having improved unload power.

FIG. 2 is a schematic of the present invention showing the precursor film being made by the blown film process, therein the melted polymer is blown into a tube and air cooled to form the precursor film. Also shown are the orienting and annealing apparatus for making an elastic film having improved unload power.

FIG. 3 illustrates the hysterisis testing procedure used for determining the unload power and residual set.

FIG. 4 plots the unload power at various extensions up to 100 percent for elastic sample Nos. 1, 2, 5 and 7.

FIG. 5 is a graph of the solubility distribution and composition distribution of a copolymer (X) having a narrow solubility distribution composition distribution and composition distribution and copolymer (Y) having a broad solubility distribution composition distribution and composition distribution.

FIG. 6 is a graph illustrating the correlation between dissolution temperature and composition used to convert the temperature scale to a composition scale.

FIG. 7 is a graph illustrating the method for calculating CDBI.

### DETAILED DESCRIPTION OF THE INVENTION

The present invention provides a fabrication method for increasing the unload power of an elastic material. According to ASTM definitions relating to rubber, elastic materials are considered those materials which rapidly return to approximately their initial dimensions and shape after substantial deformation by a weak stress and release of the stress. In the present invention, elastic materials are considered those which when stretched to twice their original length (2X) at room temperature (18 to 29°C) and held at 2X for one minute, will retract to less than 1.5X within one minute after the deforming force is released.

The present invention relates to elastic film having improved unload power produced by orienting and annealing a precursor elastic film. The precursor film is first formed by any suitable method. Once formed, the precursor film is then subjected to a combination of orienting and annealing to improve its unload power. The precursor elastic film which is to be further processed to improve its unload power according to the method of the present invention may be produced by any suitable method. Methods of making film are discussed by J. H. Briston and L.L. Katan in Plastic Films, (2nd ed. 1983). Commonly known methods of producing film which may be utilized in the present invention include casting (extrusion and solvent), calendering and extrusion methods, such as blow extrusion or slit die extrusion.

The present invention is suitable for improving the unload power of thin elastic articles. Such thin elastic articles are commonly known as ribbon, tape, film and strip. The difference between these particular terms is generally dimensional. For example, tape is generally thought of as being narrower than film. In the present invention, the terms "ribbon", "tape", "film" and "strip" are generally interchangeable, with the present invention suitable for application to thin elastic articles and not dimensionally limited. Regardless of the method of producing the precursor film, once the precursor film has been produced, it must be further processed to improve unload power of the film. This is accomplished by a combination of orienting and annealing the precursor film.

Orientation of non-elastic films such as polypropylene, polystyrene, nylon and polyethylene terephthalate to improve clarity, impact strength and, particularly in the case of polypropylene, its barrier properties is well known in the art. However, while it is not known to orient and anneal elastic materials, the methods utilized on non-elastic film are generally suitable for use with in the present process for orienting elastic film.

The orienting and annealing of the film may be carried out monoaxially in the machine direction or the transverse direction or in both directions (biaxially) either simultaneously or sequentially using conventional equipment and processes following cooling of the precursor film. Blown films are preferentially stretched in machine direction or in both directions whereas cast films are preferably stretched in the machine direction. Generally, for orientation in the machine direction, the precursor film is passed around two rollers driven at different surface speeds and finally to a take up roller. The second driven roller which is closest to the take up roll is driven faster than the first driven roller. As a consequence the film is stretched between the driven rollers. Conventional "godet" stands as are well known in the art may also be utilized.

Film orientation may also be carried out in a tentering device with or without machine direction orientation to impart transverse direction orientation in the film. The film is gripped by the edges for processing through the tentering device. For most final applications, the precursor film is monoaxially oriented in the machine direction.

The morphology of the plastomer derived tapes can be viewed as a matrix of amorphous material interspersed with crystallites. For orienting it is generally necessary that the film be heated to between its softening point and its melting point. This heating is necessary to allow extension or orientation to be induced into the film. Since the temperature is between the film softening point and melting point, the smaller imperfect crystallites will melt, whereas larger more perfect crystallites of the plastomer will remain. The molecules in the amorphous matrix become oriented or extended depending on the draw ratio and other material and fabrication parameters.

For annealing, the temperature is still between the film softening point and melting point. The annealing step is necessary to anneal or perfect the crystallites that survived the orienting step and to relax out stresses. This annealing aids in maintaining the orientation or extension induced in the orienting step. The annealing temperature is preferably less than the orienting temperature.

Generally once the film leaves the annealing step, ambient cooling is sufficient. In most cases, the film from the annealing step is then spooled in a winding unit.

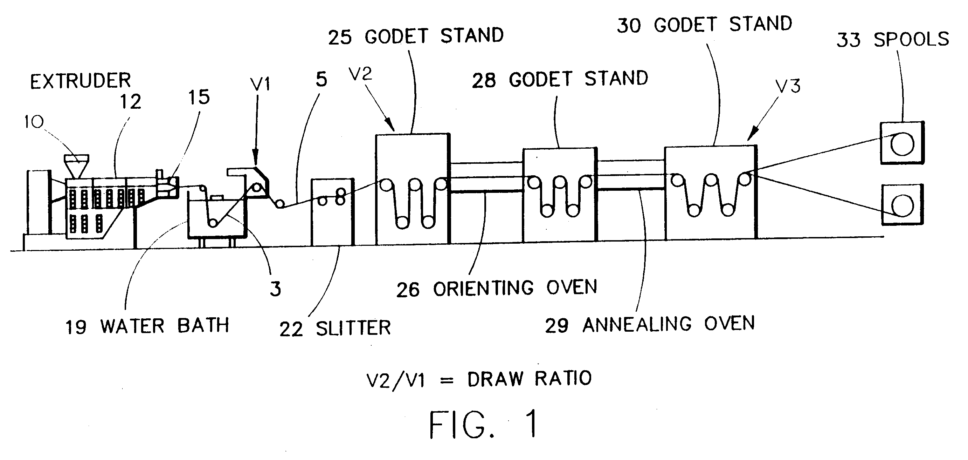

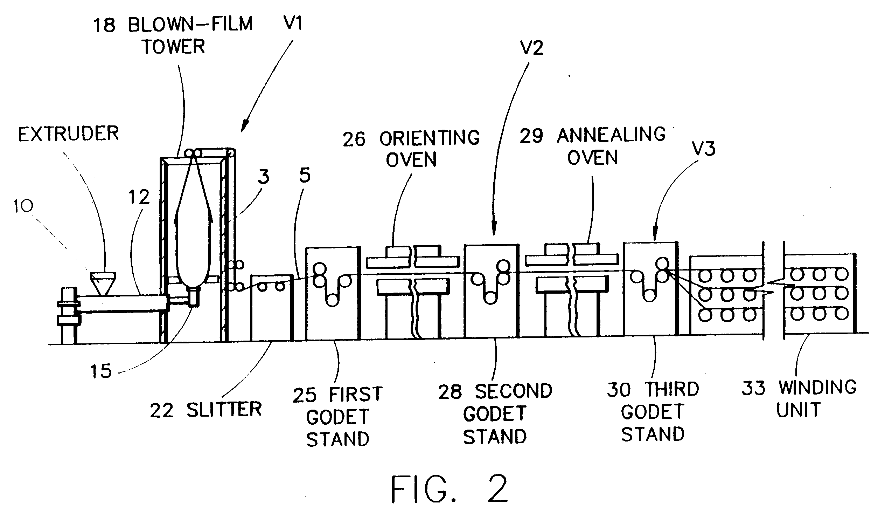

Suitable film making/orienting/annealing processes are shown in FIGs. 1 and 2 discussed below. A commercially available orientation line includes the Killion ribbon yarn line (model serial number 3874).

FIG. 1 shows a schematic of a slit film extrusion process. The elastic pellets are fed into hopper **10** of extruder **12**. In extruder **12** the elastic pellets are heated to above their melting point and extruded through die **15** into film **3**. Film **3** is subsequently cooled by quenching in water bath **19**. Slitter **22** is an optional station that slits film **3** into two or more narrower tape sections **5**. Orientation and annealing takes place utilizing first godet stand **25**, second godet stand **28**, third godet stand **30**, orienting oven **26** and annealing oven **29**. Tape **5** is subsequently wound into spools in winding unit **33**. In the orienting and annealing ovens, the material is generally heated to a temperature above the softening point but less that its melting point.

FIG. 2 shows a schematic of a blown film extrusion process. The elastic pellets are fed into hopper **10** of extruder **12**. In extruder **12** the elastic pellets are heated to above their melting point and extruded through die **15** into tube shaped film **3**. Film **3** is subsequently air cooled in blown-film tower **18**. Slitter **22** is an optional station that slits film **3** into two or more narrower tape sections **5**. Orientation and annealing takes place utilizing first godet stand **25**, second godet stand **28**, third godet stand **30**, orienting oven **26** and annealing oven **29**. Tape **5** is subsequently wound into spools in winding unit **33**.

In the process of the present invention, the draw ratio to which the film is oriented may be any ratio that will improve the unload power of the film to desired levels. In both FIGs. 1 and 2, V₁, V₂ and V₃ represent the film travel speed at various points as indicated. The draw ratio is the ratio of V₂ to V₁. Generally, the draw ratio of the drawn film could be at least 2:1, preferably at least 4:1 and most preferably at least 6:1. The upper limit on the draw ratio is generally limited by the properties of the elastic material utilized and the desired end properties of the drawn film. Generally, the draw ratio will not exceed 20:1, preferably the draw ratio will not exceed 10:1 and most preferably the draw ratio will not exceed 6:1.

Generally, V₃ is such that the film orientation can be maintained during the annealing step. This means that V₃ is generally at or near V₂.

In the present invention, the type of copolymer utilized will depend upon economics and the properties desired in the final end product.

The copolymer utilized in the present invention refers to a class of ethylene based polymers having a density of less than 0.900 g/cm³ (down to 0.855 g/cm³) at a molecular weight, M_{w} greater than 20,000 (200 MI and lower). Within the density ranges of elastomers above, the preferred ethylene based polymers are plastomers. Plastomers for the purposes of this patent application have an ethylene crystallinity between plastics linear low density and very low density polyethylenes) and ethylene/alpha-olefin elastomers and generally have a density of less than 0.900 g/cm³ down to 0.88 g/cm³.

The copolymer utilized in the present invention is selected from the group of polymers consisting of ethylene polymerized with at least one comonomer selected from the group consisting of C₃ to C₂₀ alpha-olefins and C₃ to C₂₀ polyenes. Plastomer utilized in the present invention are selected from the group of polymers consisting of ethylene polymerized with at least one comonomer selected from the group consisting of C₃ to C₂₀ alpha-olefins. The types of monomers selected in the plastomer utilized in the present invention will depend upon economics and the desired end use of the resultant fabricated material. The polyene utilized in the present invention generally has in the range of 3 to 20 carbon atoms, preferably, the polyene has in the range of 4 to 15 carbon atoms. The polyene is preferably a diene, that generally has in the range of 3 to 20 carbon atoms. Preferably, the diene utilized in the present invention is a straight chain, branched chain or cyclic hydrocarbon diene preferably having from 4 to 20 carbon atoms, and more preferably from 4 to 15 carbon atoms, and most preferably in the range of 6 to 15 carbon atoms. Most preferably, the diene is a non-conjugated diene. Examples of suitable dienes are straight chain acyclic dienes such as: 1,3-butadiene, 1,4-hexadiene and 1,6-octadiene; branched chain acyclic dienes such as: 5-methyl-1,4-hexadiene, 3,7-dimethyl-1,6-octadiene 3,7-dimethyl-1,7-octadiene and mixed isomers of dihydro myrcene and dihydroocimene; single ring alicyclic dienes such as: 1,3-cyclopentadiene, 1,4-cylcohexadiene, 1,5-cyclooctadiene and 1,5-cyclododecadiene; and multi-ring alicyclic fused and bridged ring dienes such as: tetrahydroindene, methyl tetrahydroindene, dicylcopentadiene, bicyclo-(2,2,1)-hepta-2-5-diene; alkenyl, alkylidene, cycloalkenyl and cycloalkylidene norbornenes such as 5-methylene-2-norbornene (MNB), 5-propenyl-2-norbornene, 5-isopropylidene-2-norbornene, 5-(4-cyclopentenyl)-2-norbornene, 5-cyclohexylidene-2-norbornene, 5-vinyl-2-norbornene and norbornene. Particularly preferred dienes are 1,4-hexadiene, 5-ethylidene-2-norbornene, 5-vinyllidene-2-norbornene, 5-methylene-2-norbornene and dicyclopentadiene. The especially preferred dienes are 5-ethylidene-2-norbornene and 1,4-hexadiene.

Generally, the alpha-olefins suitable for use in the present invention contain in the range of 3 to 20 carbon atoms, more preferably, of 3 to 16 carbon atoms and, most preferably 3 to 8 carbon atoms. Preferred examples of such alpha-olefins are propylene, 1-butene, 1-pentene, 1-hexene, 1-octene and 1-dodecene.

Preferably, the copolymers utilized in the material of the present invention are either ethylene/alpha-olefin copolymers or ethylene/alpha-olefin/diene terpolymers. Illustrative non-limiting examples of suitable copolymers are those such as ethylene/butene-1, ethylene/hexene-1, ethylene/octene-1, and ethylene/propylene copolymers. Suitable examples of terpolymers include ethylene/propylene/1,4-hexadiene and ethylene/butene-1/1,4-hexadiene.

The copolymers suitable in the present invention with desired monomer levels can be prepared by polymerization of the suitable monomers in the presence of supported or unsupported catalyst systems. The catalyst system utilized is a metallocene catalyst system.

The precise monomer content of the copolymers utilized in the present invention will depend upon economics and the desired applications of the resultant materials. Typically the copolymers utilized in the present invention, will generally comprise in the range of 65 mole percent to 93 mole percent ethylene (based on the total moles of monomer), preferably, 73 mole percent to 88 mole percent ethylene.

The copolymers utilized in the present invention for example can have an ethylene crystallinity less that 35 percent. Preferably, the ethylene crystallinity is less than 20 percent.

The copolymers utilized in the present invention have a density in the range of 0.855 g/cm³ to less than 0.900 g/cm³. Preferably, the elastomers have a density of 0.860 to 0.89 g/cm³, and more preferably 0.865 g/cm³ to 0.88 g/cm³. Densities were measured using standard accepted procedures, except that they were additionally conditioned by holding them for 48 hours at ambient temperature (23° C), prior to density measurement.

The melt index (MI) of the copolymers utilized in the present invention is such that the copolymer can be extruded into the desired end product. In addition, the MI must be such that the copolymer will have sufficient drawability as desired. Generally the melt index is in the range of 0.2 dg/min to 1000 dg/min, preferably the MI is not more than 100, more preferably the MI is in the range of 0.5 dg/min to 50 dg/min, and most preferably in the range of 1 dg/min to 5 dg/min. MI as measured herein was determined according to ASTM 10-1238 (190/2.16). High load MI was determined according to ASTM D-1238 (190/21.6).

The copolymers utilized in the present invention have a molecular weight distribution such that the polymer will have the desired drawability and be processable into the desired end product. The ratio of M_{w}/Mₙ is generally in the range of 1.5 to 30, preferably 1.8 to 10, more preferably 2.0 to 4.

The composition distribution breadth index (CDBI) of the copolymers utilized in the present invention is generally 45 percent or higher. Preferably, the CDBI is 60 percent or higher, and more preferably, 70 percent or higher. As used herein, the CDBI is defined as the weight percent of the copolymer molecules having a comonomer content within 50 percent (i.e. ± 50%) of the median total molar comonomer content. The CDBI of linear polyethylene, which does not contain a comonomer, is defined to be 100%.

The CDBI is determined via the technique of Temperature Rising Elution Fractionation (TREF). CDBI determination clearly distinguishes, for example, the plastomers utilized in this invention (narrow composition distribution as assessed by CDBI values of 45% or higher) from products traditionally utilized in prior art (broad composition distribution as assessed by CDBI values generally less than 45%). Composition distribution (CD), composition distribution breadth index (CDBI) were determined by techniques known in the art, such as temperature rising elution fractionation as described, for example, in U.S. Patent 5,008,204, or in Wild et al., J. Polymer Sci. Poly. Phys. Ed., volume 20, page 441 (1982). Solubility Distribution is measured using a column of length 164 cm and 1.8 cm inner diameter is packed with non-porous glass beads 548 to 841 µm (20-30 mesh) and immersed in a temperature programmable oil bath. The bath is stirred very vigorously to minimize temperature gradients within the bath, and the bath temperature is measured using a platinum resistance thermometer. About 1.6 g of polymer is placed in a sample preparation chamber and repeatedly evacuated and filled with nitrogen to remove oxygen from the system. A metered volume of tetrachlorethylene solvent is then pumped into the sample preparation chamber, where it is stirred and heated under 3.04 bar (3 atmospheres) pressure at 140°C to obtain a polymer solution of about 1 percent concentration. A metered volume of this solution, 100 ml is then pumped into the packed column thermostated at a high temperature, 120°C.

The polymer solution in the column is subsequently crystallized by cooling the column to 0°C at a cooling rate of ∼20°C/min. The column temperature is then maintained at this temperature for 25 min. at 0°C. The elution stage is then begun by pumping pure solvent, preheated to the temperature of the oil bath, through the column at a flow rate of 27 ml/min. Effluent from the column passes through a heated line to an IR detector which is used to measure the absorbance of the effluent stream. The absorbance of the polymer carbon-hydrogen stretching bands at about 2960 cm⁻¹ serves as a continuous measure of the relative weight percent concentration of polymer in the effluent. After passing through the infrared detector the temperature of the effluent is reduced to about 110°C, and the pressure is reduced to atmospheric pressure before passing the effluent stream into an automatic fraction collector. Fractions are collected in 3°C intervals. In the elution stage pure tetrachlorethylene solvent is pumped through the column at 0°C at 27 ml/min. for 25 min. This flushes polymer that has not crystallized during the cooling stage out of the column so that the percent of uncrystallized polymer (i.e. the percent of polymer soluble at 0°C can be determined from the infrared trace. The temperature is then programmed upward at a rate of 1.0°C/min. to 120°C. A solubility distribution curve, i.e. a plot of weight fraction of polymer solubilized as a function of temperature, is thus obtained.

The procedure for calculating the Solubility Distribution Breadth Index (SDBI) is set forth below.

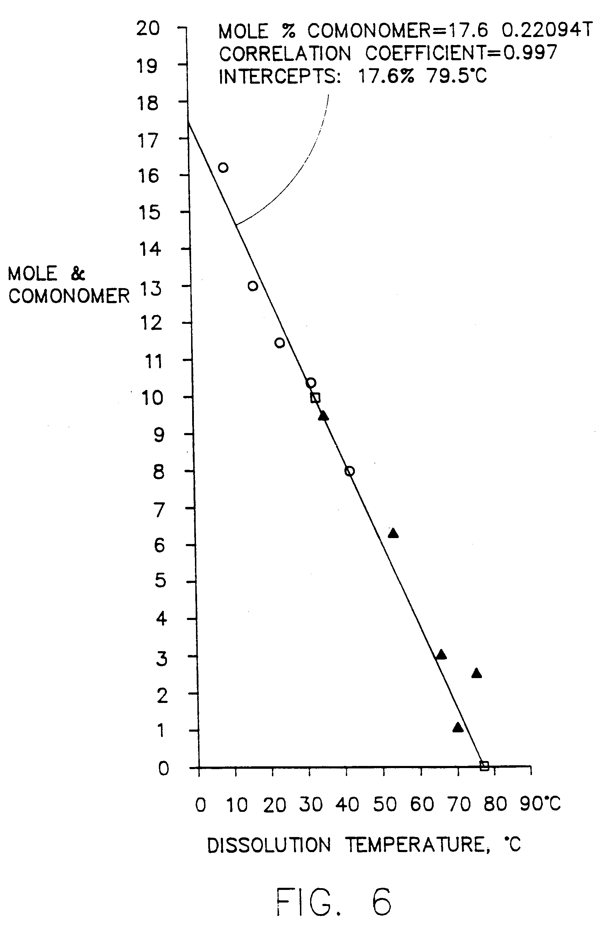

Solubility distributions of two ethylene interpolymers are shown in FIG. 5. Here, for illustration purposes only, Sample X has a narrow solubility distribution and elutes over a narrow temperature range compared to Sample Y, which has a broad solubility distribution. A solubility distribution breadth index (SDBI) is used as a measure of the breadth of the solubility distribution curve. Let *w*(T) be the weight fraction of polymer eluting (dissolving) at temperature T. The average dissolution temperature, T ₐᵥₑ, is given by${\text{T}}_{\text{ave}} \text{=} \text{o} \text{120} \text{T} \text{w} \text{(T)dT,} \text{where} \text{o} \text{120} \text{w} \text{(T)dT = 1.}$

SDBI is calculated using the relation:$\text{SDBI(°C) = [} \text{o} \text{120} {\text{(T - T}}_{\text{ave}} {\text{)}}^{\text{4}} \text{w} {\text{(T)dT]}}^{\text{1/4}}$

SDBI is thus analogous to the standard deviation of the solubility distribution curve, but it involves the fourth power rather than the second power to T - Tₐᵥₑ). Thus, for example, the narrow solubility distribution Sample X and the broad solubility distribution Sample Y in Figure 5 have SDBI values equal to 14.6°C and 29.4°C, respectively. The preferred values of SDBI are less than 23°C and more preferred less than 20°C and even more preferred less than 16°C.

The composition distribution (CD) of a crystalline interpolymer is determined as follows. The composition and number average molecular weight, Mₙ, of fractions collected in various narrow temperature intervals for several poly(ethylene-co-butene)'s was determined by C13 NMR and size exclusion chromatography, respectively. Figure 6 is a plot of mole percent comonomer vs. elution temperature for fractions having Mₙ > 15,000. The curve drawn through the data points is used to correlate composition with elution temperature for temperatures greater than 0°C. The correlation between elution temperature and composition becomes less accurate as the Mₙ of a fraction decreases below 15,000. Such errors can be eliminated by direct measurement of the composition of effluent fractions by C13 NMR. Alternatively, the elution temperature-composition calibration for high molecular weight fractions given in Figure 6 may be corrected based on the Mₙ of effluent fractions and an experimentally established correlation between Mₙ and elution temperature that applies for Mₙ < 15,000. However, it is assumed that such low molecular weight molecules are present to a negligible extent and that any errors caused are negligible. A correlation curve such as the one in FIG. 6 is applicable to any essentially random poly(ethylene-co-α-olefin) provided, however, that the α-olefin is not propylene.

The temperature scale of a solubility distribution plot can thus be transformed to a composition scale, yielding a weight fraction of polymer versus composition curve. As seen from the composition scale in Figure 5, Sample X contains molecules spanning a narrow composition range, whereas Sample Y contains molecules spanning a wide composition range. Thus, Sample X has a narrow composition distribution whereas Sample Y has a broad composition distribution.

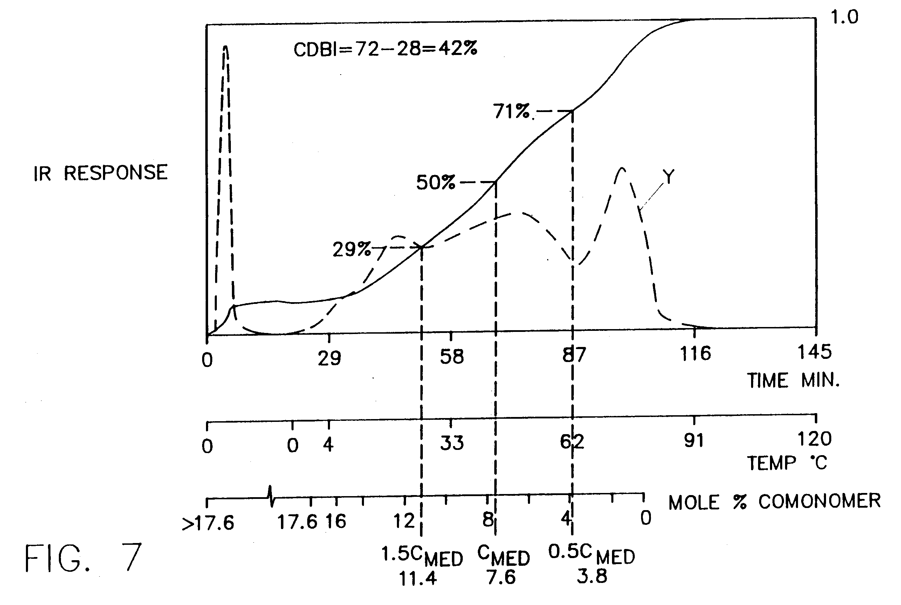

A quantitative measure of the breadth of the composition distribution is provided by the CDBI. CDBI is defined to be the percent of polymer whose composition is within 50% of the median comonomer composition. It is calculated from the composition distribution curve and the normalized cumulative integral of the composition distribution curve, as illustrated in Figure 7. The median composition, C_{med}, corresponds to the composition at the point where the cumulative integral equals 0.5. The difference between the values of the cumulative integral at compositions 0.5 C_{med} and 1.5 C_{med} (71 - 29, or 42%, in this example) is the CDBI of the copolymer. CDBI values fall between zero and one, with large values indicating narrow CD and low values indicating broad CD. Thus, now referring back to Figure 5, the narrow and broad CD copolymers have CDBI's equal to 95.5% and 42%, respectively. It is difficult to measure the CD and CDBI of copolymers having very low comonomer content with high accuracy so the CDBI of polyethylenes with densities greater than 0.94 g/cm³ is defined to be equal to 100%.

Unless otherwise indicated, terms such as "comonomer content", "average comonomer content" and the like refer to the bulk comonomer content of the indicated interpolymer blend, blend component or fraction on a molar basis.

The benefits to the discovery of the subject invention that accrue from the structural features of copolymers alluded to above (vis-a-vis molecular weight distribution, composition distribution, molecular weight, comonomer type and amount) are elucidated as follows. The narrow molecular weight distribution provides high strength and good draw down. The narrow composition distribution (high CDBI value) provides low tackiness and a low melting temperature/melting range (for heat shrinkage and "gather" formation at relatively low temperatures). The comonomer incorporation level in plastomers affords low specific gravity for high end product yields (e.g., yards/lb of polymer). Yet, copolymers have modest levels of ethylene crystallinity (around 20%) which give rise to orientability and strength in the fabricated elastic articles. Control of the molecular weight allows control of orientation and elasticity. Finally, copolymers are hydrocarbon-based and so chemically quite inert.

The copolymers useful in the present invention may be produced by any suitable method that will yield a polymer having the required properties, that when fabricated into an elastic article by the method of the present invention, will have suitable residual set and unload power properties. An illustrative non-limiting example of a particularly suitable method of making the copolymer useful in the present invention utilizes a class of highly active olefin catalysts described earlier as transition metal metallocenes, which are well known especially in the preparation of polyethylene and copolyethylene-alpha-olefins. There are a number of structural variables which affect the ultimate properties of the plastomer. Two of the most important are composition distribution (CD) and molecular weight distribution. Composition distribution refers to the distribution of comonomer between copolymer molecules. This feature relates directly to polymer crystallizability, optical properties, toughness and many other important use characteristics. Molecular weight distribution plays a significant role in melt processability as well as the level and balance of physical properties achievable. Also important is the molecular weight (MW) of the polymer, which determines the level of melt viscosity and the ultimately desired physical properties of the polymer. The type and amount of comonomer also affects the physical properties and crystallizability of the copolymer.

The copolymers utilized in the present invention may be made by any suitable process which allows for the proper control of the above mentioned structural features (MW, MWD, CD, comonomer type and amount) to yield the desired polymer with the desired elastics properties. One suitable method is through the use of a class of highly active olefin catalysts known as transition metal metallocenes.

Metallocenes are well known especially in the preparation of polyethylene and copolyethylene-alpha-olefins. These catalysts, particularly those based on group IV transition metals, zirconium, titanium and hafnium, show extremely high activity in ethylene polymerization. The metallocene catalysts are also highly flexible in that, by manipulation of catalyst composition and reaction conditions, they can be made to provide polyolefins with controllable molecular weights from as low as about 200 (useful in applications such as lube oil additives) to about 1 million or higher, as for example in ultra high molecular weight linear polyethylene. At the same time, the molecular weight distribution of the polymers can be controlled from extremely narrow (as in a polydispersity, M_{w}/Mₙ, of about 2), to broad (as in a polydispersity of 8 or above).

"Metallocene" catalysts for the purposes of this application are herein defined to contain one or more cyclopentadienyl or other pi-bonded moiety. Cyclopentadienylide catalyst systems using a metallocene complex in conjunction with an alumoxane or reaction product thereof are suitable for preparing the polymer utilized in the invention. The metallocene catalyst, for example may be represented by the general formula (Cₚ)ₘMRₙR'ₚ wherein a Cₚ is a substituted or unsubstituted cyclopentadienyl ring; M is a Group IV,V, VI transition metal; R and R' are independently selected halogen, hydrocarbyl group, or hydrocarboxyl groups having 1-20 carbon atoms; m = 1-3, n = 0-3, p = 0-3, and the sum of $\text{m + n + p}$ equals the oxidation state of M. Various forms of the catalyst system of the metallocene type may be used for polymerization to prepare the polymer components of the present invention including those of the homogenous or the heterogeneous, supported catalyst type wherein the catalyst and alumoxane cocatalyst are together supported or reacted together onto an inert support for polymerization by gas-phase, high pressure, slurry, or solution polymerization. The use of metallocene catalysts for the polymerization of ethylene is described in US-A-4,937,299 and EP-A-0 129 368 published July 26, 1989, US-A-4,808,561, US-A-4,814,310, and US-A-4,937-299. Specific methods for making ethylene/alpha-olefin copolymers, and ethylene/alpha-olefin/diene terpolymers are taught in US-A-4,871,705. The alumoxane may be prepared with water for example in the form of a hydrated ferrous sulfate. Other cocatalysts may be used with metallocenes, such as trialkylaluminum compounds; or ionizing ionic activators or compounds such as, tri (n-butyl) ammonium tetra(pentaflurophenyl) boron, which ionize the neutral metallocene compound. Such ionizing compounds may contain an active proton, or some other cation associated with (but not coordinated or only loosely coordinated to) the remaining ion of the ionizing ionic compound. Such compounds are described in EP-A-0 277 003 and EP-A-0 277 004 both published August 3, 1988. Further, the metallocene catalyst component can be monocyclopentadienyl heteroatom containing compound, which is activated, for example, by either an alumoxane or an ionic activator to form an active polymerization catalyst system to produce polymers useful in this present invention as is shown for example by WO92/00333 published January 9, 1992, US-A-5,055,438, EP-A-0 420 436 and WO91/ 04257. The catalyst systems described above may be optionally prepolymerized or used in conjunction with an additive component to enhance catalytic productivity. Utilizing a metallocene catalyst, the polymers of the present invention can be produced in accordance with any suitable polymerization process, including a slurry polymerization, gas phase polymerization and high pressure polymerization process.

Utilizing a transition metal metallocene catalyst, the copolymers useful in the present invention can be produced in accordance with any suitable polymerization process, including a slurry polymerization, gas phase polymerization, and high pressure polymerization process.

The copolymer of the present invention may be fabricated into any form that is suitable for the use to which it will serve.

### REFERENTIAL EXAMPLES

In order to provide a better understanding of the present invention including representative advantages thereof the following referential examples are offered as related to actual tests performed in the practice of this invention, and illustrate the surprising and unexpected elastic properties of this present invention and are not intended as a limitation on the scope of the invention.

### EXAMPLE 1

### Preparation of Ethylene/alpha-olefin Plastomer (2.8MI, 0.88D, hexene-1 comonomer)

### PROCESS SUMMARY

| | | | | | | | | |
|---|---|---|---|---|---|---|---|---|
| RXN | Comon. | C₂ | Avg. | Tot. | Wet | Tot. | Tot. | Cat. |
| TEMP. | | Press. | C₂ | C₂ | Prod. | Cat. | Cocat.* | Eff. |
| Target/ | | Target/ | Rxn | | wt | | | |
| Actual | C₆ | Actual | Rate | | | | | |
| °F | (Lb) | psi | (Lb/min) | Lb | Lb | mg | Lb | Lb/Lb Cat |
| 131/135.5±3 | 201 | 60/60±2 | 0.15 | 60 | 150 | 35.4 | 7 | 19.45 |
| °C | Kg | Bar | (Kg/min) | Kg | Kg | mg | Kg | Kg/Kg |
| 55/57.2±1.7 | 91 | 4.13 | 0.068 | 27.18 | 67.9 | 35.4 | 3.17 | 19.45 |

| | | | | | | | | |
|---|---|---|---|---|---|---|---|---|
| * 10wt% solution in toluene | | | | | | | | |

The catalyst system for polymerizing this ethylene copolymer comprised bis(n-butylcyclopentadienyl)zirconium dichloride as catalyst and a 10wt% methylalumoxane in toluene solution as cocatalyst.

The polymerization was conducted in a batch mode using a diluent phase polymerization process. A 227 liter (150 gallons) pilot plant reactor was used to carry out the polymerization. Prior to charging the reactants the reactor vessel was rinsed with triethyl aluminum and purged with nitrogen. Isopentane diluent was then fed to the reactor via a mol-sieve bed to remove moisture. Next the required weights of hexene-1 comonomer and cocatalyst solution (10 wt% MAO in toluene) were charged. The reactor contents were heated to reaction temperature. At thermal equilibrium, ethylene was slowly fed to the reactor until the pressure set point was reached.

Reaction was initiated by controlled addition of catalyst (3 x 10 mg charges). This was followed by addition, as needed, to build and sustain a controllable reaction. Reaction rate was monitored by noting reactor temperature and heat removal rates from the water heat exchanger. The reaction was killed after 27.18 kg(60lbs) of ethylene had been fed to the reactor. Product recovery began by slowly venting the reactor to 0.34 bar (5 psi.), followed by adding water and, with a nitrogen purge to flare, heating the mixture to 73.9°C(165°F) to flash remove the isopentane and unreacted comonomer. The product was recovered from the reactor, compounded with Irganox®-1076 stabilizer and melt extruded to screen out contaminants and pelletize the material.

The product was analyzed to have a Melt Index of 2.8, density of 0.88 g/cm³ and a Melt Index Ratio (I_{21.6}/I_{2.16}) of 23. It will be recognized by persons skilled in the art that products with different Melt Indices and Densities to the above product can be obtained by adjusting the process conditions. Additionally, the composition of the product can be altered, depending on the choice of alpha-olefin comonomer.

### EXAMPLE 2

Table 1 shows the description of the samples utilized in this example. Numbers 1 and 2 are the same plastomer sample made according to example 1 above. Number 1 was fabricated to a draw ratio of 5:1 according to the method of the present invention, whereas Number 2 was produced in a traditional cast film operation and was not subject to the combination of orientation and annealing as was Number 1. Numbers 3, 4 and 6 have appreciable levels of ethylene crystallinity and do not show good elastic response and extensibility by the fabrication of this method. Numbers 5, 6 and 7 are commercially available materials. Number 5 was obtained in 0.05 mm (2 mil) strip form, whereas Number 7 was obtained in 0.05 mm (2 mil) film form.

Elastic sample No. 1 and non-elastic sample Nos. 3, 4 and 6 were fabricated into oriented tapes or ribbons, using a Killion ribbon yarn line (Model Serial No. 3874). This apparatus can be represented by the schematic of FIG. 1 except that a slitter was not utilized.

Table 2 provides a dimensional characterization of the fabricated strip samples used in the evaluation.

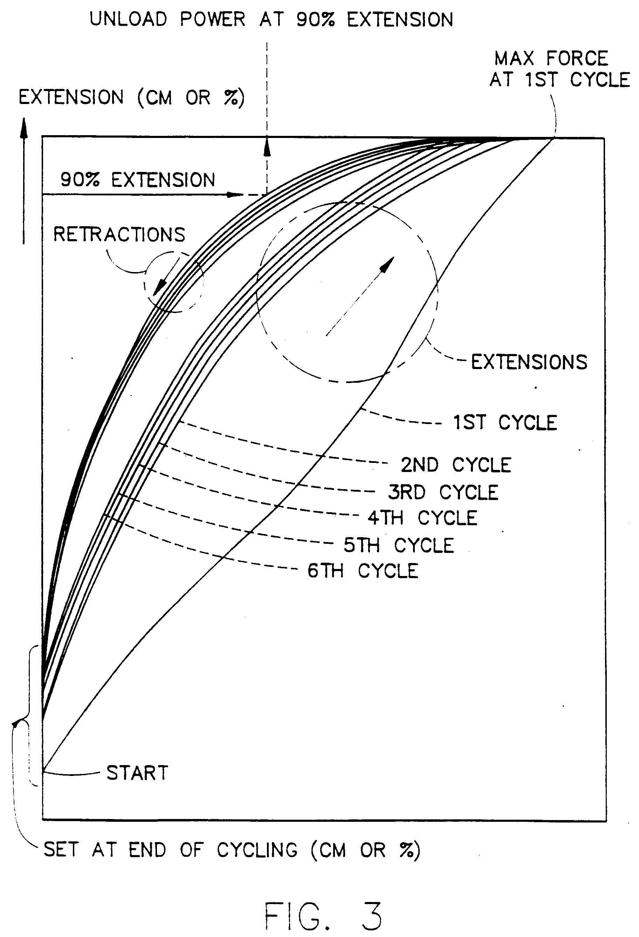

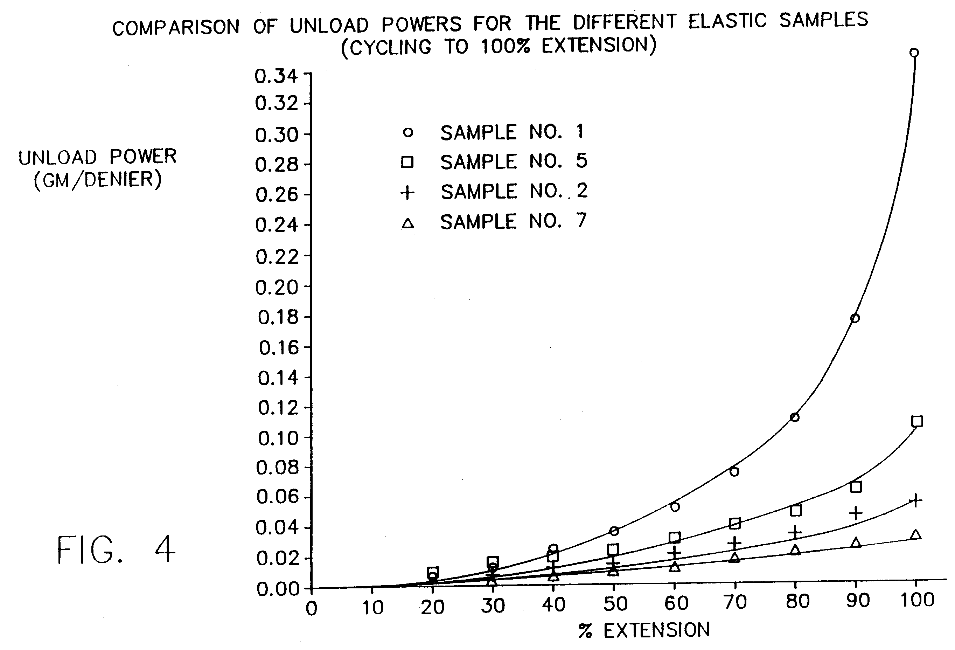

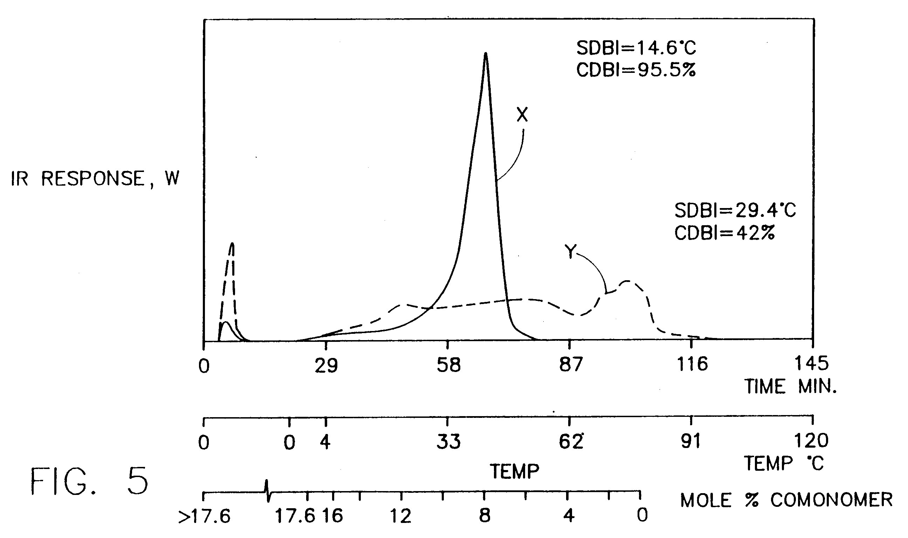

The hysteresis testing procedure used is shown in FIG. 3. The method is based on a procedure described by DuPont in its brochure on its polyether urethane elastic product, T-722A. The testing was conducted on an Instron Model No. 1122. 30.48 cm (12 in) lengths of the sample film strip to be tested were held by the Instron jaws and extended 100% using a cross-head speed of 500 mm/min. Following the extension, the cross head was retracted, also at 500 mm/min, back to the original position. This cycling was conducted six times. The force versus extension curves were plotted (chart speed also 500 mm/min) as is shown in FIG. 3. Key pieces of information that are extracted from these plots are maximum force reached at the end of each extension (lb force), residual set at the end of five cycles (cm, %) and the unload powers measured during the fifth cycle retraction at various elongations (lb force). Generally five lengths were tested for each sample, with mean values over these samples developed.

FIG. 4 plots the unload power at various extensions up to 100 percent for elastic sample Nos. 1, 2, 5 and 7. Sample Nos. 3, 4 and 6 were too crystalline (non-elastic) and did not have sufficient extensibility to survive the repeated cycling to 100 percent. As seen in FIG. 4, the unload power is very dependent on the particular fabrication approach. The same polymer (plastomer of Example 1) can be made to show different unload power values, depending on fabrication technique. The fabrication process of this invention which includes the combination of orientation and annealing, provided a much higher value of unload power than was obtained using a traditional extrusion casting fabrication technique.

Table 4 shows a summary of the hysteresis testing on cycling to 100% extension. The set after 5 cycles appears comparable for the 4 samples, ranging from 15 to 20 percent, per the testing procedure followed. The high unload power and the favorable low set value provided by sample No. 1 (plastomer ribbon), demonstrate the utility of the fabrication process of this invention to provide suitable elastic end products.

Table 3 shows shrinkage measurements at elevated temperatures (i.e. shrinkage of original lengths) on the 4 samples that survived cycling to 100 percent extension. The fabrication process of this invention provides high shrinkage at lower temperatures, which is an advantage in certain elastic applications (compare values for plastomer ribbon versus plastomer cast film strip).

Table 5 quantifies the force at break values and the ultimate elongation values during tensile testing of the tape/film on an Instron Model 1122 with cross head speed of 500 mm/min.

**TABLE 1**

| DESCRIPTION OF SAMPLES | | |
|---|---|---|
| NUMBER | RESIN DESCRIPTION | TAPE/STRIP FABRICATING DETAILS |
| 1. | Plastomer (2.8MI,0.88D,23 MIRatio;C2/C6) | Oriented tape (5:1 draw ratio) produced on 19 mm (3/4 inch) Killion ribbon yarn line |
| 2. | Plastomer (2.8MI,0.88D,23 MIRatio;C2/C6) | Cast film; Film cut into strips about 0.6 cm wide for testing |
| 3. | VLDPE (1.4MI,0.90D,60 MIRatio;C2/C6) | Oriented tape (5:1 draw ratio) produced on 19 mm (3/4 inch) Killion ribbon yarn line |
| 4. | LLDPE (0.7MI,0.922D,35 MIRatio;C2/C6) | Oriented tape (5:1 draw ratio) produced on 19 mm (3/4 inch) Killion ribbon yarn line |
| 5. | T-722A polyether copolymer | 50 µm (2 mil) elastic strip (DuPont Elastic Products Group, Wilmington, Deleware) |
| 6. | VLDPE X-142 (0.9MI,0.90D,27 MIRatio;C2/C6) | Oriented tape (5:1 draw ratio) produced on 19 mm (3/4 inch) Killion ribbon yarn line (Polymer from Mitsubishi Petrochemical Co., Japan |
| 7. | Exxtraflex 120 | Exxtraflex 120 film (Exxon Film Products, Lake Zurich, Illinois) |

**TABLE 2**

| SAMPLES CHARACTERIZATION | | | |
|---|---|---|---|
| SAMPLE ID | dtex (DENIER (G/9000M)) MEAN VALUE * | STRIP WIDTH | STRIP THICKNESS |
| 1. Plastomer ribbon | 3354 (3723) | 0.4 cm (.1575 in) | 0.114 mm (4.49 mil) |
| 2. Plastomer cast film strip | 2234 (2480) | 0.6 cm (.2362 in) | 0.05 mm (1.97 mil) |
| 3. VLDPE ribbon | 3108 (3450) | 0.4 cm (.1575 in) | 0.109 mm (4.29 mil) |
| 4. LLDPE ribbon | 2744 (3046) | 0.4 cm (.1575 in) | 0.087 mm (3.43 mil) |
| 5. DuPont Polyether copoly film strip | 3305 (3668) | 0.7 cm (.2756 in) | 0.0521 mm (2.05 mil) |
| 6. Mitsubishi VLDPE X-142 Ribbon | 2416 (2682) | 0.3 cm (.1181 in) | 0.102 mm (4.02 mil) |
| 7. Exxtraflex 120 Film Strip | 2416 (2682) | 0.6 cm (.2362 in) | 0.051 mm (2.01 mil) |

| | | | |
|---|---|---|---|
| * value used in calculations in this study. 1 den = 1.11 dtex | | | |

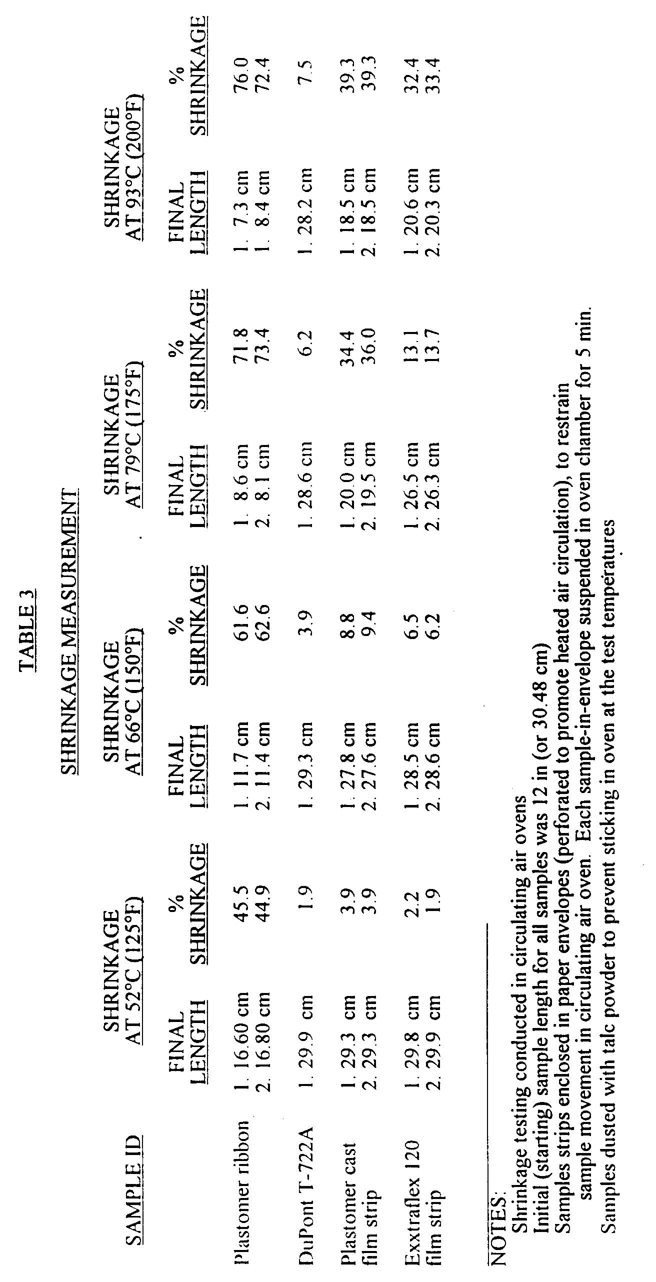

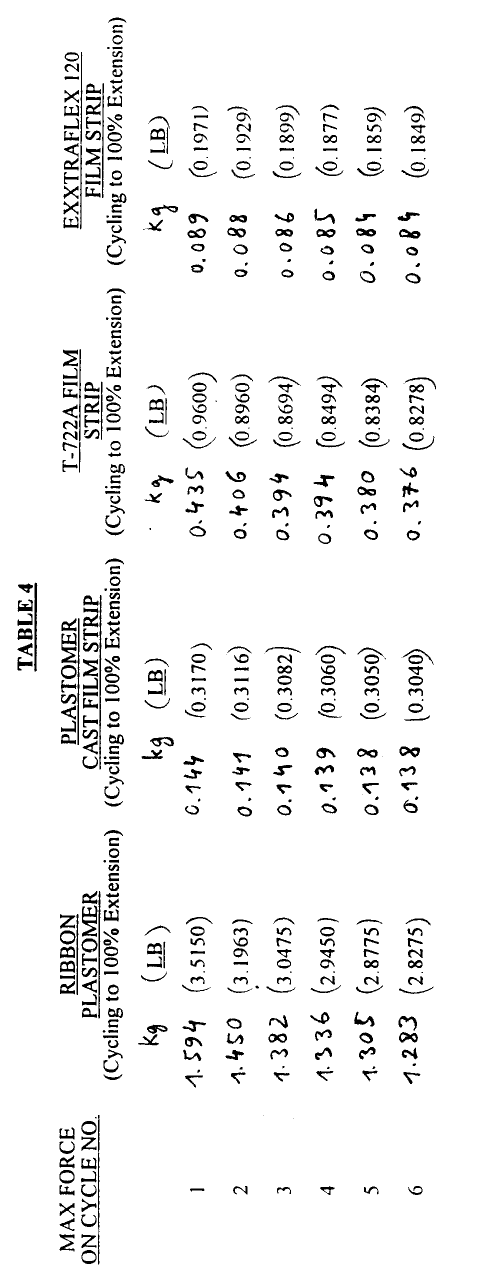

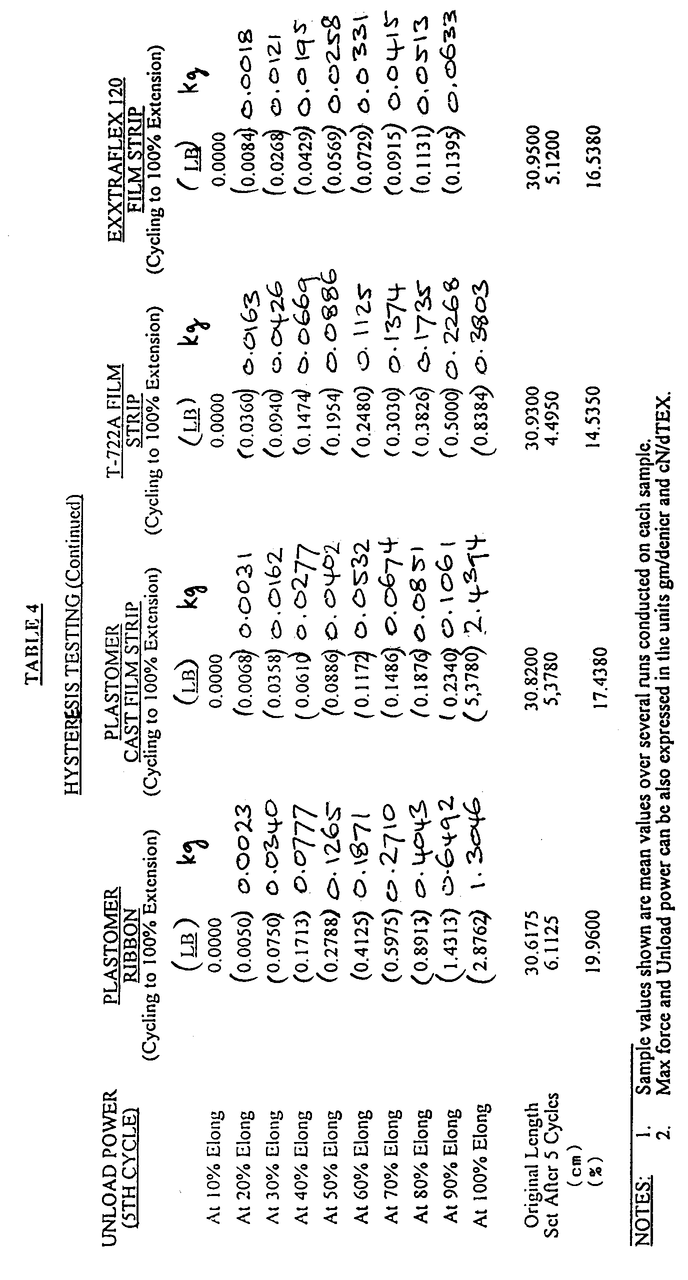

**TABLE 5**

| ULTIMATE TENSILE STRENGTH* & ELONGATION MEASUREMENTS | | | |
|---|---|---|---|
| SAMPLE | TEST SPECIMEN STARTING LENGTH (cm) | FORCE AT BREAK kg (lbf) | ELONGATION AT BREAK (%) |
| 1. Plastomer Ribbon | 7.5 | 5.71 (12.6) | 230 |
| 2. Plastomer Cast Film Strip | 7.5 | 0.575 (127) | 562 |
| 3. VLDPE Ribbon | 7.5 | 5.43 (12.0) | 112 |
| 4. LLDPE Ribbon | 7.5 | 5.71 (12.6) | 93 |
| 5. T-722A (DuPont) | 7.5 | 2.10 (4.63) | 755 |
| 6. VLDPE X-142 (Mitsibishi Chem) | 7.4 | 4.08 (9.0) | 134 |
| 7. Exxtraflex -120 (Exxon) | 7.5 | did not break | >1000 |

| | | | |
|---|---|---|---|
| * actually, force at break kg (lbf) values, from Instron chart recording. Instron cross-head speed 500 mm/min. | | | |

## Claims

1. An elastic film having been orientated to a draw ratio in the range of 2:1 to 20:1, said film comprising a copolymer of ethylene polymerized with at least one comonomer selected from the group consisting of C₃ to C₂₀ alpha-olefins and C₃ to C₂₀ polyenes utilizing a metallocene catalyst, said copolymer having a density in the range of 0.855 g/cm³ to less than 0.900 g/cm³, a melt index in the range of 0.2 to 1000, a Composition Distribution Breadth Index of 45 percent or higher and a molecular weight distribution in the range of 1.5 to 30.

2. The elastic film of claim 1 wherein the copolymer has a density from 0.88 to less than 0.900 g/cm³.

3. The elastic film of any one of the preceding claims wherein the copolymer has a melt index of not more than 100.

4. The elastic film of any one of the preceding wherein the elastic film is produced by slit-die extrusion.

5. The elastic film of any one of the preceding wherein the elastic film is produced by blown film extrusion.

6. The elastic film of any one of the preceding wherein the alpha-olefin is selected from the group consisting of propylene, 1-butene, 1-pentene, 1-hexene, 1-octene and 1-dodecene.

7. The elastic film of any one of preceding claims wherein the copolymer has a density in the range from 0.860 g/cm³ to 0.890 g/cm³, a melt index from 0.5 to 50, a molecular weight distribution from 1.8 to 10, and a Composition Distribution Breadth Index of at least 60 percent.

8. The elastic film of any one of the preceding claims wherein the polyene is a diene selected from the group consisting of straight chain dienes, branched chain dienes and cyclic hydrocarbon dienes.

9. The elastic film of any one of the preceding claims wherein the diene is selected from the group consisting of 1,3-butadiene, 1,4-hexadiene, 1,6-octadiene, 5-methyl- 1,4-hexadiene, 3,7-dimethyl-1,6-octadiene, 3,7-dimethyl-1,7-octadiene, mixed isomers of dihydro myrcene and dihydroocimene, 1,3-cyclopentadiene, 1,4-cylcohexadiene, 1,5-cyclooctadiene and 1,5-cyclododecadiene, tetrahydroindene, methyl tetrahydroindene, dicylcopentadiene, bicyclo-(2,2,1)-hepta-2-5-diene, 5-methylene-2-norbornene (MNB), 5-propenyl-2-norbornene, 5-isopropylidene-2-norbornene, 5-(4-cyclopentenyl)-2-norbornene, 5-cyclohexylidene-2-norbornene, 5-vinyl-2-norbornene and norbornene.

10. The elastic film of any one of the preceding claims wherein the copolymer comprises in the range of 65 mole percent to 93 mole percent ethylene (based on the total moles of monomer).

11. The elastic film of any one of the preceding claims wherein the copolymer comprises in the range of 73 mole percent to 88 mole percent ethylene (based on the total moles of monomer).

12. The elastic film of any one of the preceding claims wherein the copolymer has an ethylene crystallinity less than 20 percent.

13. The elastic film of any one of the preceding claims wherein the elastic film is bonded or sealed to polyolefins.

14. A product made with the elastic film of any one of the preceding claims.

## Patentansprüche

1. Elastische Folie, die auf ein Reckverhältnis im Bereich von 2:1 bis 20:1 orientiert worden ist, wobei die Folie ein Copolymer von Ethylen umfaßt, das mit mindestens einem Comonomer ausgewählt aus der Gruppe bestehend aus C₃- bis C₂₀-α-Olefinen und C₃- bis C₂₀-Polyenen unter Verwendung eines Metallocenkatalysators polymerisiert worden ist, wobei das Copolymer eine Dichte im Bereich von 0,855 g/cm³ bis weniger als 0,900 g/cm³, einen Schmelzindex im Bereich von 0,2 bis 1000, einen Breitenindex der Zusammensetzungsverteilung von 45 % oder höher und eine Molekulargewichtsverteilung im Bereich von 1,5 bis 30 hat.

2. Elastische Folie nach Anspruch 1, bei der das Copolymer eine Dichte von 0,88 bis weniger als 0,900 g/cm³ hat.

3. Elastische Folie nach einem der vorhergehenden Ansprüche, bei der das Copolymer einen Schmelzindex von nicht mehr als 100 hat.

4. Elastische Folie nach einem der vorhergehenden Ansprüche, bei der die elastische Folie durch Breitschlitzextrusion hergestellt ist.

5. Elastische Folie nach einem der vorhergehenden Ansprüche, bei der die elastische Folie durch Blasfolienextrusion hergestellt ist.

6. Elastische Folie nach einem der vorhergehenden Ansprüche, bei der das α-Olefin ausgewählt ist aus der Gruppe bestehend aus Propylen, 1-Buten, 1-Penten, 1-Hexen, 1-Octen und 1-Dodecen.

7. Elastische Folie nach einem der vorhergehenden Ansprüche, bei der das Copolymer eine Dichte im Bereich von 0,860 g/cm³ bis 0,890 g/cm³, einen Schmelzindex von 0,5 bis 50, eine Molekulargewichtsverteilung von 1,8 bis 10 und einen Breitenindex der Zusammensetzungsverteilung von mindestens 60 % hat.

8. Elastische Folie nach einem der vorhergehenden Ansprüche, bei der das Polyen ein Dien ausgewählt aus der Gruppe bestehend aus geradkettigen Dienen, verzweigtkettigen Dienen und cyclischen Kohlenwasserstoffdienen ist.

9. Elastische Folie nach einem der vorhergehenden Ansprüche, bei der das Dien ausgewählt ist aus der Gruppe bestehend aus 1,3-Butadien, 1,4-Hexadien, 1,6-Octadien, 5-Methyl-1,4-hexadien, 3,7-Dimethyl-1,6-octadien, 3,7-Dimethyl-1,7-octadien, gemischten Isomeren von Dihydromyrcen und Dihydroocimen, 1,3-Cyclopentadien, 1,4-Cyclohexadien, 1,5-Cyclooctadien und 1,5-Cyclododecadien, Tetrahydroinden, Methyltetrahydroinden, Dicyclopentadien, Bicyclo[2.2.1]hepta-2,5-dien, 5-Methylen-2-norbornen (MNB), 5-Propenyl-2-norbornen, 5-Isopropyliden-2-norbornen, 5-(4-Cyclopentenyl)-2-norbornen, 5-Cyclohexyliden-2-norbornen, 5-Vinyl-2-norbornen und Norbornen.

10. Elastische Folie nach einem der vorhergehenden Ansprüche, bei der das Copolymer Ethylen im Bereich von 65 Mol.% bis 93 Mol.% umfaßt, bezogen auf die gesamten Mol an Monomer.

11. Elastische Folie nach einem der vorhergehenden Ansprüche, bei der das Copolymer Ethylen im Bereich von 73 Mol.% bis 88 Mol.% umfaßt, bezogen auf die gesamten Mol an Monomer.

12. Elastische Folie nach einem der vorhergehenden Ansprüche, bei der das Copolymer eine Ethylenkristallinität von weniger als 20 % hat.

13. Elastische Folie nach einem der vorhergehenden Ansprüche, bei der die elastische Folie an Polyolefine gebunden oder gesiegelt ist.

14. Produkt, das mit der elastischen Folie nach einem der vorhergehenden Ansprüche hergestellt ist.

## Revendications

1. Film élastique qui a été orienté à un rapport d'étirage dans l'intervalle de 2:1 à 20:1, ce film comprenant un copolymère d'éthylène polymérisé avec au moins un comonomère choisi parmi le groupe constitué des alpha-oléfines en C₃ à C₂₀ et des polyènes en C₃ à C₂₀ en utilisant un métallocène comme catalyseur, ce copolymère ayant une masse volumique dans l'intervalle de 0,855 g/cm³ à moins de 0,900 g/cm³, un indice d'écoulement à l'état fondu dans l'intervalle de 0,2 à 1000, un Indice d'Etendue de Distribution de Composition de 45 % ou davantage et une distribution des masses moléculaires dans l'intervalle de 1,5 à 30.

2. Film élastique selon la revendication 1, dans lequel le copolymère a une masse volumique de 0,88 à moins de 0,900 g/cm³.

3. Film élastique selon l'une quelconque des revendications précédentes, dans lequel le copolymère a un indice d'écoulement à l'état fondu non supérieur à 100.

4. Film élastique selon l'une quelconque des revendications précédentes, qui est produit par extrusion à travers une filière plate.

5. Film élastique selon l'une quelconque des revendications précédentes, qui est produit par extrusion-soufflage de feuilles.

6. Film élastique selon l'une quelconque des revendications précédentes, dans lequel l'alpha-oléfine est choisie dans le groupe constitué du propylène, du 1-butène, du 1-pentène, du 1-hexène, du 1-octène et du 1-dodécène.

7. Film élastique selon l'une quelconque des revendications précédentes, dans lequel le copolymère a une masse volumique dans l'intervalle de 0,860 g/cm³ à 890 g/cm³, un indice d'écoulement à l'état fondu de 0,5 à 50, une distribution des masses moléculaires de 1,8 à 10 et un Indice d'Etendue de Distribution de Composition d'au moins 60 %.

8. Film élastique selon l'une quelconque des revendications précédentes, dans lequel le polyène est un diène choisi dans le groupe constitué des diènes à chaîne linéaire, des diènes à chaîne ramifiée et des diènes hydrocarbonés cycliques.

9. Film élastique selon l'une quelconque des revendications précédentes, dans lequel le diène est choisi dans le groupe constitué par le 1,3-butadiène, le 1,4-hexadiène, le 1,6-octadiène, le 5-méthyl-1,4-hexadiène, le 3,7-diméthyl-1,6-octadiène, le 3,7-diméthyl-1,7-octadiène, des isomères mélangés du dihydro-myrcène et du dihydroocinène, le 1,3-cyclopentadiène, le 1,4-cyclohexadiène, le 1,5-cyclooctadiène et le 1,5-cyclododécadiène, le tétrahydroindène, le méthyltétrahydroindène, le dicyclopentadiène, le bicyclo-(2,2,1)-hepta-2,5-diène, le 5-méthylène-2-norbornène (MNB), le 5-propényl-2-norbornène, le 5-isopropylidène-2-norbornène, le 5-(4-cyclopentényl)-2-norbornène, le 5-cyclohexylidène-2-norbornène, le 5-vinyl-2-norbornène et le norbornène.

10. Film élastique selon l'une quelconque des revendications précédentes, dans lequel le copolymère comprend dans l'intervalle de 65 moles % à 93 moles % de l'éthylène (par rapport aux moles totales de monomère).

11. Film élastique selon l'une quelconque des revendications précédentes, dans lequel le copolymère comprend dans l'intervalle de 73 moles % à 88 moles % d'éthylène (par rapport aux moles totales de monomère).

12. Film élastique selon l'une quelconque des revendications précédentes, dans lequel le copolymère a une cristallinité de l'éthylène inférieure à 20 %.

13. Film élastique selon l'une quelconque des revendications précédentes, qui est lié ou scellé à des polyoléfines.

14. Produit fabriqué avec le film élastique selon l'une quelconque des revendications précédentes.
